# EUROPEAN PATENT SPECIFICATION

(11) **EP 2 534 292 B1**
(45) Date of publication and mention of the grant of the patent: **22.01.2014**
(21) Application number: 11709463.1
(22) Date of filing: 07.02.2011
(51) Int. Cl.: D06B 19/00, D06B 23/20, C01C 1/10, D06M 11/00

(54) **PLANT AND RELATIVE METHOD TO RECOVER AND REINTEGRATE AMMONIA IN A MACHINE FOR TREATING TEXTILE PRODUCTS**
ANLAGE UND ZUGEHÖRIGES VERFAHREN ZUR RÜCKGEWINNUNG UND REINTEGRATION VON AMMONIAK BEI EINER MASCHINE ZUR BEHANDLUNG VON TEXTILPRODUKTEN
INSTALLATION ET PROCEDE ASSOCIE POUR RECUPERER ET REINTEGRER DE L'AMMONIAC DANS UNE MACHINE DE TRAITEMENT DE PRODUITS TEXTILES

(30) Priority: 09.02.2010 IT UD20100023
(43) Date of publication of application: 19.12.2012
(73) Proprietor: Franchetti, Roberto, 36100 Vicenza (IT)
(72) Inventor: Franchetti, Roberto, 36100 Vicenza (IT)
(74) Representative: Petraz, Gilberto Luigi
(86) International application number: PCT/IB2011/000191
(87) International publication number: WO 2011/098878

(56) References cited:
- WO-A1-2007/093583
- FR-A1- 2 526 005

## Description

### FIELD OF THE INVENTION

The present invention concerns a plant and the relative method to recover and reintegrate the ammonia consumed in finishing treatments of textile products, performed to improve the aesthetic and commodity characteristics thereof.

More particularly, the plant according to the present invention allows to reintegrate the ammonia, in real time and in an adjustable manner, substantially as a function of the actual consumption deriving from the finishing treatment of the textile product. Here and hereafter in the description, by textile products we mean fabrics, yarns, knitwear, non-fabrics and similar or comparable natural or synthetic products.

### BACKGROUND OF THE INVENTION

Methods are known for finishing fabrics with ammonia, or baths of liquid ammonia, in order to improve the aesthetic and commodity characteristics of the fabric's, increasing their affinity with dyes, stability in washing, anti-crease effect, a soft feel, contributing to maintaining their "new" look even after repeated washes and increasing their resistance to pilling and tearing.

In the current state of the art, fabrics are impregnated with liquid ammonia possibly after passing through a depression chamber; the ammonia is subsequently removed by means of evaporation, possibly combined with a subsequent pass of the fabric in a depression chamber.

A process is also known for treating fabrics, previously impregnated with special chemical resins, which uses ammonia in its gaseous state; in this case, the ammonia in its gaseous state acts as a catalyst for the polymerization of the resins previously applied to the fabric, for the anti-flame finishing.

In the treatment of fabrics with ammonia, rather simple devices and machines are used; on the contrary the apparatus used to recover and condense the ammonia is very complex and difficult to manage, and this is often an impediment to the development and location of plants of this type.

Examples of such plants are described in documents US A 3721097 and US A 4074969. Other solutions of plants for textile processes using ammonia are shown in WO-A1-2007/093583 and in FR-A1-2.526.005.

According to documents BE 1009874 A5 and DE 19949534 A1, the ammonia gases that develop inside the treatment machine are collected and fixed in a so-called "scrubber", in the form of ammonium hydrate, and are then stored in a suitable tank.

The portion of ammonia thus collected is separated from the water by distillation carried out in a distillation tower, at a pressure of about 10-15 atm.

The distillation process is known, and is not explained here in any further detail.

The distillation towers, on the other hand, in order to be fed, require large volumes for storing the ammonia; they also need a very long start-up time before they reach normal working conditions.

Another disadvantage of known distillation towers is that they are able to provide only a well-defined quantity of distilled ammonia, that is, the amount for which the tower was sized, and therefore it is not possible to intervene with a real-time adjustment of the delivery and/or temporary stand-by conditions.

As things stand, the liquid ammonia consumed for treating textile fiber and the losses that occur during the processing of the fabric are reintegrated, near the plant, with fresh ammonia taken from big storage tanks installed outside the plant.

A large quantity of liquid ammonia stored in suitable tanks entails considerable safety problems, and therefore requires dedicated plants to control the possible leakages of ammonia.

Such plants, given their complexity, are very expensive, they need particular authorizations for installation and are continuously subjected to inspections by the competent authorities.

The industrial application of the treatment of fabrics with liquid ammonia, or ammonia solution, has therefore always met with considerable disadvantages connected to plant safety regarding the recovery and storage of the ammonia.

Therefore, although their effectiveness and validity in terms of results on the fabric are well known, such methods are not very widespread.

One purpose of the present invention is to provide a method able to reintegrate, adjustably and in total safety, the ammonia consumed during the finishing process on the textile material, allowing the chemical reaction between the fiber and the ammonia, limiting the losses of ammonia into the air, decontaminating the fabric and allowing to recover the gaseous ammonia that is not consumed inside the ammonia plant without using large storage tanks.

Another purpose of the present invention is to reintegrate the ammonia consumed with reintegrated ammonia extracted from an ammonia solution easily purchased on the market.

Another purpose of the present invention is to limit the volume of the storage tank on board the machine, so as to avoid plant complexities for making it safe.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the invention is associated with a machine that performs a treatment on textile products with ammonia, in order to improve the aesthetic and commodity characteristics thereof.

The plant according to the present invention comprises a recovery unit provided with a condensing device, which is configured to recover the gaseous ammonia extracted from the treatment machine, and then to supply liquid ammonia to the treatment machine.

According to a characteristic feature of the present invention, the plant also comprises a reintegration unit able to supply a quantity of ammonia substantially equal to that consumed during the treatment.

The reintegration unit, in particular, comprises at least a source of ammonia solution and a distillation unit able to distill the ammonia solution in a selectively adjustable manner in order to obtain gaseous ammonia to be integrated in proximity with the condensing device.

The combined use of the recovery unit and the reintegration unit allows to eliminate big storage tanks for the ammonia, since the quantity of ammonia to be reintegrated is produced directly in proportion to the quantity consumed or dispersed during the treatment of the textile products.

The recovery and reintegration plant therefore provides to recover the ammonia not consumed during the impregnation step, and to reintegrate the ammonia consumed with ammonia obtained from the distillation step of an ammonia solution that can easily be found on the market.

According to one embodiment of the present invention, the plant also comprises a compression or ventilation station that provides to move the gaseous ammonia. In particular, the compression or ventilation station is connected on one side both to the recovery unit and also to the reintegration unit, whereas on the other side it is connected to the condensing device which provides to condense both the ammonia recovered from the treatment machine and also the reintegrated ammonia.

A variant of the present invention provides that the distillation unit comprises at least two distillation devices connected to each other, both hydraulically for the liquid ammonia solution to pass between them, and also pneumatically for gaseous ammonia to pass in the other direction.

According to one embodiment of the invention, the at least two distillation devices are associated with temperature conditioning means that keep them at a temperature progressively increasing in the direction of flow of the liquid ammonia solution.

According to one possible application, the ammonia solution able to be reintegrated in the reintegration unit is a solution of ammonium hydrate, easily found on the market and which does not need particular attention with regard to safety.

In another embodiment, the ammonia solution able to be reintegrated in the reintegration unit is a solution of ammonium salts.

According to a variant of the present invention, the reintegration unit also comprises a second condensing unit which is interposed between the first distillation device and the compression or ventilation station in order to decontaminate the water vapors exiting from the first distillation device.

Another variant of the present invention provides that the treatment machine comprises a feed tank able to provide ammonia to the treatment machine. The feed tank advantageously has a very limited capacity, for example less than 100 liters, so that it is not necessary to provide plants and/or equipment to make it safe.

In another embodiment, the condensing device is associated with an indirect cooling device able to allow the ammonia to condense from the gaseous state, to render it available to the feed tank in its liquid state.

The present invention also concerns a method to recover and reintegrate ammonia comprising at least a step of impregnating the textile product, a step of extracting the ammonia gases, a step of recovering the gases extracted and a step of integrating the ammonia consumed.

In particular, the step of integrating the ammonia consumed comprises a step of distilling an ammonia solution, to obtain a selectively adjustable quantity of ammonia to be integrated in the step of impregnating the textile product.

The working pressure of the distillation and reintegration process of the ammonia can be equal to atmospheric pressure, or can also be higher or lower than atmospheric pressure: this is not restrictive for the purposes of the present invention.

### BRIEF DESCRIPTION OF THE DRAWING

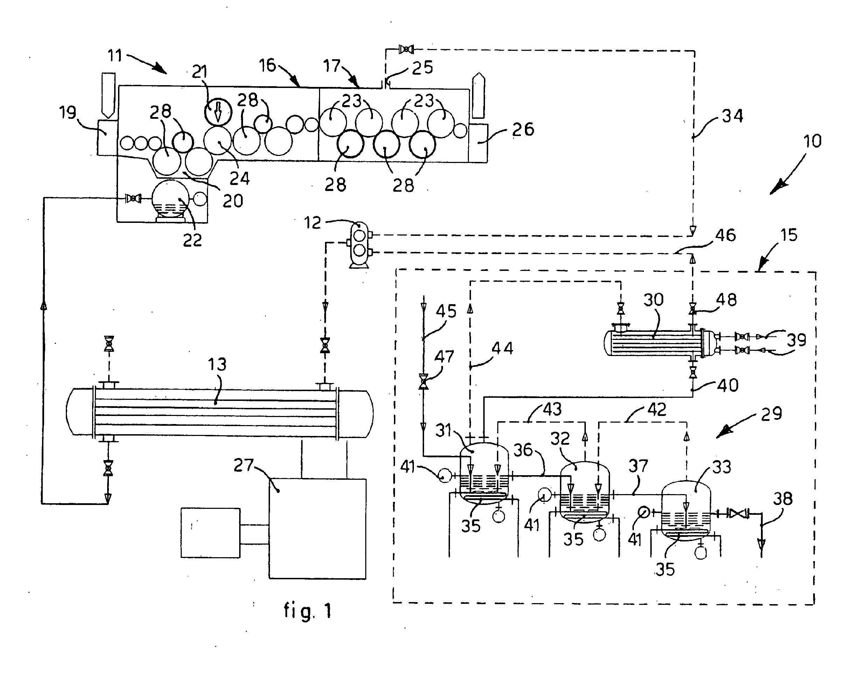

These and other characteristics of the present invention will become apparent from the following description of a preferential form of embodiment, given as a non-restrictive example with reference to the attached fig. 1, which is a schematic representation of the plant for processing textile products with ammonia according to the present invention.

### DETAILED DESCRIPTION OF A PREFERENTIAL FORM OF EMBODIMENT

With reference to fig. 1, a plant 10 to recover and reintegrate ammonia according to the present invention is associated with a treatment machine 11 for textile products and comprises, as its main components, a compression or ventilation station 12, a first condenser 13 and an ammonia reintegration unit 15.

The treatment machine 11 comprises, in a known manner, an impregnation sector 16 and an evaporation sector 17, and can work continuously, discontinuously or semi-continuously.

The treatment machine 11 normally operates at atmospheric pressure, although the possibility cannot be excluded that it may work at a higher pressure or a lower pressure than atmospheric.

The impregnation sector 16 comprises a feed device 19 to feed the textile products, an impregnation tank 20 containing liquid ammonia, a pressing roll 21 to press the textile product, a contrasting roll 24, winding rolls 28 onto which the textile product partly winds, and an ammonia feed tank 22.

The impregnation tank 20 is disposed on the bottom of the treatment machine 11 and allows to impregnate the textile product with ammonia and subsequently to collect the excess ammonia deriving from the pressing of the textile product.

The textile product, in contact with the liquid ammonia, reacts chemically with it so as to obtain the desired finishing treatment.

If gaseous ammonia is used, it can be introduced directly into the impregnation sector 16 of the treatment machine 11, or can be obtained by taking the ammonia present in the impregnation tank 20 of the treatment machine 11 to evaporation.

According to another embodiment, the textile product can be treated with a treatment ammonia solution.

Treatment ammonia solutions include solutions in both the liquid and the gaseous state, and also solutions containing chemical products, ammonium salts, colorants, caustic soda and combinations thereof.

The pressing roll 21 is pressed against the contrasting roll 24 in order to exert a pressing action on the excess ammonia contained in the textile product when the textile product is made to pass through the rolls 21-24.

The feed tank 22 of the liquid ammonia has a capacity limited only to the needs of the treatment machine 11, to give a non-restrictive example, to a maximum of 100 liters, and the level is constantly reintegrated, as described hereafter in detail. Given the limited capacity of the feed tank 22, the problems relating to the safety of the plant are greatly limited, and plant complexities due to the safety of the plant are also avoided.

The evaporation sector 17 of the treatment machine 11 comprises heated rolls 23 cooperating with the winding rolls 28, an aperture 25 to extract the ammonia gases through an extraction line 34 and a device 26 to extract the textile product.

The heated rolls 23 contribute to determine the evaporation of the ammonia still contained in the textile product, so as to eliminate it.

In other embodiments, the heated rolls 23 can be replaced by simple, unheated rolls, in this way limiting the evaporation process of the ammonia.

The aperture 25 allows to extract the ammonia gases deriving from the evaporation due to the heated rolls 23.

The compression or ventilation station 12 is able to extract the gaseous ammonia from the aperture 25 in order to transfer it, through the extraction line 34, to the first condenser 13.

The first condenser 13 is connected to a cooling device 27, which can consist for example of a chiller unit with a cooling liquid, an evaporation condenser, a cooling tower or other device suitable for the purpose. The cooling device 27 is suitable to cool indirectly the gaseous ammonia circulating inside it, thus causing it to condense.

The ammonia exiting from the first condenser 13 is in the liquid state and can be sent to the feed tank 22 of the treatment machine 11. The temperature of the liquid at exit from the first condenser 13 depends on its working pressure and, to give an example, at atmospheric pressure is about -34°C. This temperature, at a pressure of about 10 atmospheres, becomes about 25°C. In this second case, before being conveyed to the tank 22, the liquid ammonia must be cooled to a temperature near that of the liquid already present in the tank 22.

This recovery process determines the condensation and re-circling of about 95% of the whole quantity of ammonia used during the process. The chemical reaction of the textile products with the ammonia entails an ammonia consumption that depends on the type of treatment, the type and the grams per square meter of the textile product processed and the working speed. Another part of ammonia is dispersed during the normal functioning of the plant, or during the final decontamination of the textile product, or suchlike.

This consumption and dispersion of ammonia is estimated, to give an example and on average, as about 5%÷7% of the ammonia used during the treatment; this entails the need to reintegrate, periodically or continuously, the feed tank 22 or the impregnation tank 20 of the treatment machine 11. To maintain a correct functioning of the treatment machine 11, the reintegration must be made substantially in real time by the reintegration unit 15, depending on the level of liquid ammonia continuously present inside the feed tank 22.

The ammonia reintegration unit 15 comprises a distillation unit 29 and a second condenser 30. In this case, and as a preferential solution, the distillation unit 29 uses a reintegration ammonia solution, in this case ammonium hydrate, easily found on the market, and which avoids the above described safety problems so as to obtain almost pure ammonia to be integrated into the plant 10.

In other embodiments, the distillation unit 29 uses reintegration ammonia solutions that may comprise ammonium salts such as ammonium phosphate, ammonium sulfate, ammonium acetate and/or combinations thereof. Combinations of ammonium hydrate with sodium hydrate are also comprised as ammonia solutions, or combinations of ammonium hydrate with potassium hydrate, or combinations of ammonium hydrate and another hydrate and/or combinations thereof.

The reintegration unit 15 in any case functions also with ammonia solutions with an irregular or non-defined concentration of the quantity of ammonia contained therein.

The distillation unit 29 comprises in this case a first 31, a second 32 and a third 33 distillation container, each of which is provided with its own and autonomous means to adjust and control the temperature 35 of the solution present inside it, and level sensors 41.

According to other forms of embodiment, the number of distillation containers is other than three, but in any case no less than two.

During the distillation of the ammonium hydrate, according to a well known law, the most volatile component of the mixture, that is, the ammonia, passes to its vapor state to a greater quantity than the less volatile component, that is, the water; in this case a liquid solution is obtained of water/ammonia containing mainly water, and a gaseous mixture with a concentration of ammonia larger than the liquid solution.

In particular, depending on the temperature of the ammonium hydrate solution, the concentration of ammonia in the liquid solution and in the mixture in the vapor state varies according to the values shown in Table 1.

**Table 1 (with reference to atmospheric pressure, as per the process software)**

| Temperature [°C] | % of ammonia in the liquid solution | % of ammonia in the mixture in the vapor state |
|---|---|---|
| -34 | 100 | 100 |
| -30 | 85.4 | 100 |
| -25 | 74.6 | 100 |
| -20 | 66.6 | 99.99 |
| -15 | 60.1 | 99.98 |
| -10 | 54.4 | 99.95 |
| -5 | 49.5 | 99.9 |
| 0 | 44.9 | 99.85 |
| 5 | 40.8 | 99.7 |
| 10 | 37 | 99.5 |
| 15 | 33.5 | 99.2 |
| 20 | 30.2 | 98.7 |
| 25 | 27.1 | 98.1 |
| 30 | 24.2 | 97.2 |
| 35 | 21.6 | 96 |
| 40 | 19.1 | 94.4 |
| 45 | 16.7 | 92.4 |
| 50 | 14.6 | 89.7 |
| 55 | 12.6 | 86.4 |
| 60 | 10.7 | 82.2 |
| 65 | 8.9 | 77.1 |
| 70 | 7.3 | 70.8 |
| 75 | 5.8 | 63.1 |
| 80 | 4.4 | 53.9 |
| 85 | 3.1 | 42.3 |
| 90 | 1.9 | 29.9 |
| 95 | 0.8 | 14.5 |
| 100 | 0 | 0 |

The containers 31, 32 and 33 are maintained, in order, at increasing temperatures that are selectively determinable with the temperature adjustment and control means 35.

The ammonium hydrate is reintegrated through an integration line 45 into the first distillation container 31. A part of the solution is taken to a vapor state in the form of a gassy mixture with a high concentration of ammonia and a low concentration of water in the vapor state.

Once it has reached a pre-established limit detected by the level sensor 41, the liquid solution in the first container 31 is conveyed to the second container 32 by means of a first discharge 36.

The second container 32 is kept at a higher temperature than the first container 31 by means of the temperature adjustment and control means 35.

The liquid solution conveyed from the first container 31, due to the effect of the higher temperature at which the second container 32 is kept, is transformed partly in the form of a gaseous mixture, with a lower percentage of ammonia and a higher percentage of water in the vapor state, compared with the gaseous mixture in the first container 31.

The remaining part of the liquid solution fills the second container 32 until it reaches a pre-established level, detected by the level sensor 41, which provides to convey the liquid solution into the third container 33 by means of the second discharge 37.

The liquid solution conveyed from the second container 32, due to the effect of the higher temperature at which the third container 33 is kept, is transformed partly in the form of a gaseous mixture, with a lower percentage of ammonia and a higher percentage of water in the vapor state, compared with the gaseous mixture in the second container 32.

The remaining part of the liquid solution has a very low concentration of ammonia, it fills the third container 33 until it reaches a pre-established level, detected by the level sensor 41. The liquid solution is discharged through a third discharge 38 in the form of ammonium hydrate containing a limited quantity of ammonia, almost zero. The ammonium hydrate containing a determinate, although low, percentage of ammonia can subsequently be used in specific applications of textile finishing, or for other purposes.

The liquid solutions present inside the containers 31, 32 and 33 have gradually increasing concentrations of water and consequently the ammonia found therein is gradually decreasing.

On the contrary, the gaseous mixture of ammonia and water in vapor state has a concentration of gaseous ammonia increasing in order from the first to the second, and then to the third container 31, 32, 33.

In particular, the gaseous mixture in the third container 33 is made to bubble, through a first pipe 42, into the second container 32 where, due to the effect of the lower temperature there, partly re-condenses and goes to fill the second container 32. In particular, only a small part of ammonia re-condenses in the form of ammonium hydrate, whereas a bigger quantity of water in vapor state passes to the liquid state.

In this way, a gaseous mixture is obtained in the second container 32 with a higher concentration of ammonia than the gaseous mixture in the third container 33.

The gaseous mixture in the second container 32 at this point is made to bubble into the first container 31 through a second pipe 43 where, due to the effect of the lower temperature there, it partly re-condenses and goes to fill the first container 31. In particular, only a small part of ammonia re-condenses in the form of ammonium hydrate, whereas a bigger quantity of water in vapor state passes to the liquid state.

In this way, a gaseous mixture is obtained in the first container 31 with a higher concentration of ammonia than the gaseous mixture in the second container 32.

This cycle of repeated evaporations/condensations inside the containers kept at different temperatures with respect to each other allows to obtain, in the first container 31, a gaseous mixture with a high concentration of ammonia and very low in water.

The gaseous mixture inside the first container 31 is sent at this point through a third pipe 44 into the second condenser 30, where the last traces of water are decontaminated.

The second condenser 30, by means of the compression or ventilation station 12, sends the gaseous ammonia to the first condenser 13 so that it is condensed before reintegration in the feed tank 22.

The compression or ventilation station 12 therefore provides to move both the gaseous ammonia recovered from the treatment machine 11, and also the reintegrated ammonia obtained from the reintegration unit 15.

Suitable feed pipes 39 in the second condenser 30 allow the forced circulation inside it of a condensation fluid.

A discharge gap 40, provided in the second condenser 30, allows to discharge the liquid solution condensed in it in the form of ammonium hydrate; the liquid solution is returned to the first container 31 and returned to circulation in the distillation unit 29. The portion of mixture not condensed in the second condenser 30 has a high concentration of ammonia, exits from the second condenser 30 still in the gaseous state and is sent to the compression or ventilation station 12 by means of a reintegration pipe 46.

In another embodiment, not shown in fig. 1, the gaseous ammonia exiting from the second condenser 30 is introduced directly in the gaseous state by means of the reintegration pipe 46 inside the treatment machine 11; this solution is advantageous when the fabrics are treated with gaseous ammonia.

In another embodiment, not shown, the gaseous ammonia exiting from the condenser 30 or from the first container 31 is introduced inside a condenser, which can even be very small, associated with a cooling device 27, for example a chiller, to be transformed to the liquid state before being re-introduced into the tank 22.

The whole process of distilling the ammonia solution and reintegrating the ammonia is performed at a working pressure that can be equal to atmospheric pressure, but the possibility is not excluded that the process can be performed at a lower or higher pressure than atmospheric pressure.

In order to render clearer the description of the distillation process that occurs in the three containers 31, 32, 33 of the distillation unit 29, two examples will now be given, non-restrictive, relating to the distillation of ammonium hydrate.

In the two specific cases a solution of ammonium hydrate was used, containing 25% of ammonia.

### Example 1: with a working pressure equal to atmospheric pressure (non-restrictive in the various temperature settings).

First container 31: has a temperature of 40°C, set and maintained constant by the temperature adjustment and control means 35. In these conditions of temperature and pressure, the concentration of ammonia, with reference to table 1, inside the liquid solution is 19.1%, whereas the concentration of ammonia inside the gaseous mixture is 94.4% (5.6% water); once a pre-established control threshold has been reached, the liquid solution of ammonium hydrate, with a low ammonia content, is sent by means of the first discharge 36 inside the second distillation container 32.

Second container 32: has a temperature of 70°C, set and maintained constant by the temperature adjustment and control means 35. In these conditions of temperature and pressure, the concentration of ammonia, with reference to table 1, inside the liquid solution is 7.3%, whereas the concentration of ammonia inside the gaseous mixture is 70.8% (29.2% water); once a pre-established control threshold has been reached, the liquid solution of ammonium hydrate, with a lower ammonia content, is sent by means of the second discharge 37 inside the third distillation container 33. The mixture of gaseous ammonia is made to bubble and cool in the first container 31 by means of the second pipe 43. Third container 33: has a temperature of about 99°C, set and maintained constant by the temperature adjustment and control means 35. In these conditions of temperature and pressure, the concentration of ammonia, with reference to table 1, inside the liquid solution has decreased to almost 0%, whereas the concentration of ammonia inside the gaseous mixture is about 5% (95% water); once a control threshold has been reached as pre-established by the level sensor 41, the liquid solution of ammonium hydrate, with an even lower ammonia content, is discharged by means of the third discharge 38. The mixture of gaseous ammonia contained in the third container 33 is made to bubble and cool in the second container 32 at 70°C, by means of the first pipe 42.

If the temperature inside the third container 33 is, for example, kept at 85°C, the percentage of ammonia still present in the ammonia solution at exit from the third discharge 38 will be about 3.1%.

The evaporation in three successive steps guarantees that the part of ammonia in the ammonium hydrate solution integrated at the beginning of the cycle is almost totally removed, whereas the almost pure ammonia solution (containing about 5% of water) in the gaseous state is collected, by means of the third pipe 44, at the head of the first distillation container 31, and taken to the second condenser 30 to be decontaminated of the residual water and sent toward the first condenser 13.

In particular, the gaseous ammonia exiting from the second condenser 30 in this case is at a temperature of about 10°C so that, in relation to the water ammonia balance table, the percentage of ammonia contained in the gaseous mixture is about 99.5%, that is, the ammonia is almost totally pure.

If, in the first container 31 or another container mounted upstream of the first container 31, the temperature were kept at 10°C, the ammonia fumes exiting would be 99.5% pure, and therefore the second condenser 30 might not even be necessary.

### Example 2: with a working pressure of 0.5 atm (non-restrictive in the various temperature settings).

### First distillation container 31:

Temperature of the solution kept constant at 30°C.
Content of ammonia in liquid phase: 16%
Content of ammonia in gaseous phase: 93%

### Second distillation container 32:

Temperature of the solution kept constant at 50°C.
Content of ammonia in liquid phase: 8%
Content of ammonia in gaseous phase: 77%

### Third distillation container 33:

Temperature of the solution kept constant at 80°C.
Content of ammonia in liquid phase: about 0%
Content of ammonia in gaseous phase: less than 5%

The quantity of gaseous ammonia extracted, with the containers 31, 32 and 33 and the second condenser 30 kept always at the pre-set temperature, is a function of the quantity of ammonia solution entering, by means of the integration line 45, into the divided distillation unit 29.

As the demand to reintegrate the liquid ammonia varies, as determined by means of indicators of the level of the quantity of liquid ammonia present in the feed tank 22, so will the stream of integrated ammonia solution vary, entering the distillation unit 29, which ammonia solution then gives up its portion of ammonia in the form of gas.

When the treatment machine 11 is stopped, the integration of ammonia in the feed tank 22 is interrupted, both by closing the feed of ammonium hydrate in the integration line 45 by means of a first valve 47, and also by closing the feed of ammonia through the reintegration pipe 46 by means of a second valve 48, and also by closing the discharge line 38.

The reintegration unit 15 can therefore be put in a stand-by position, cyclically repeating the evaporation /condensation steps inside the containers 31, 32, 33 and keeping the relative levels in communication. In this way, by opening the first and second valve 47, 48 and the discharge line 38, the distillation step is instantaneously restarted already at normal working conditions.

The different components of the plant 10 are provided with recovery channels that prevent the dispersion of ammonia into the work place. The ammonia dispersed, or arriving from the drain of the first condenser 13, is present in the form of gaseous ammonia mixed with air or mixed with water vapors, and is conveyed to a suitable collector, or "scrubber", (not shown in the drawings).

As known in the state of the art, the scrubber allows to fix and concentrate the ammonia in the form of ammonium hydrate and to discharge the air or other gases into the atmosphere, distilled from the ammonia.

The ammonium hydrate deriving therefrom is subsequently reintegrated into the ammonia integration plant through the integration line 45 of the distillation unit 29.

It is clear, however, that modifications and variants may be made to the present invention, without departing from the field and scope thereof as defined by the following claims.

## Claims

1. Plant to recover and reintegrate ammonia associated with a treatment machine (11) for creating textile products, the plant comprising a recovery unit having at least a first condensing device (13), able to recover gaseous ammonia extracted from said treatment machine (11), and to provide liquid ammonia to said treatment machine (11), **characterized in that** it also comprises a reintegration unit (15), able to reintegrate in the treatment machine (11) an amount of ammonia substantially equal to that consumed during the treatment, the reintegration unit (15) comprising at least a source (45) of ammonia solution and a distillation unit (29) able to distill said ammonia solution, in a selectively adjustable manner, in order to obtain gaseous ammonia to be fed at least partly to said first condensing device (13).

2. Plant as in claim 1, **characterized in that** it also comprises a compression or ventilation station (12) to move the gaseous ammonia, said compression or ventilation station (12) being connected on one side both to the treatment machine (11) and to the reintegration unit (15) and on the other side to said first condensing device (13).

3. Plant as in claim 1, **characterized in that** said distillation unit (29) comprises at least two distillation devices (31, 32, 33) connected with respect to each other both hydraulically, for the passage between them of said liquid ammonia solution, and also pneumatically, for the passage of gaseous ammonia in the inverse direction.

4. Plant as in claim 3, **characterized in that** said at least two distillation devices (31, 32, 33) are associated with means (35) to adjust and control the temperature, which keep them at a progressively increasing temperature in the direction of flow of the liquid ammonia solution.

5. Plant as in any claim hereinbefore, **characterized in that** the ammonia solution able to be reintegrated in said reintegration unit (15) is an ammonium hydrate solution.

6. Plant as in any of claims 1 to 4 hereinbefore, **characterized in that** the ammonia solution which is able to be reintegrated in said reintegration unit (15) is a solution of ammonium salts.

7. Plant as in any claim hereinbefore, **characterized in that** said reintegration unit (15) comprises, in addition to the first condensing device (13), a second condensing device (30) able to be interposed between said first distillation device (31) and the compression or ventilation station (12) in order to further recover the ammonia.

8. Plant as in any claim hereinbefore, **characterized in that** said treatment machine (11) comprises a feed tank (22), with a maximum capacity in the range of 100 liters, able to supply ammonia to said treatment machine (11), said feed tank (22) being directly connected to the first condensing device (13).

9. Plant as in any claim hereinbefore, **characterized in that** said first condensing device (13) is associated with a cooling device (27) able to allow the condensation of the ammonia from the gaseous state.

10. Method to recover and reintegrate ammonia, comprising at least a step of impregnating the textile product in a treatment machine (11), a step of extracting the ammonia gases, a step of recovering and condensing the extracted gases, a step of integrating the ammonia consumed, **characterized in that** said step of integrating the ammonia consumed comprises a step of distilling an ammonia solution, so as to obtain a selectively adjustable amount of gaseous ammonia to be reintroduced into the treatment machine (11) of the textile product.

11. Method as in claim 10, **characterized in that** the working pressure is equal to atmospheric pressure, is less than or higher than atmospheric pressure.

## Patentansprüche

1. Anlage zum Rückgewinnen und Reintegrieren von Ammoniak, die mit einer Behandlungsmaschine (11) zum Behandeln von Textilprodukten assoziiert ist, wobei die Anlage eine Rückgewinnungseinheit mit mindestens einer ersten Kondensiereinrichtung (13) umfasst, die aus der Behandlungsmaschine (11) extrahiertes gasförmiges Ammoniak zurückgewinnen kann und flüssiges Ammoniak an die Behandlungsmaschine (11) liefern kann, **dadurch gekennzeichnet, dass** sie auch eine Reintegrationseinheit (15) umfasst, die eine Menge an Ammoniak in die Behandlungsmaschine (11) reintegrieren kann, die im Wesentlichen gleich der ist, die während der Behandlung verbraucht wird, wobei die Reintegrationseinheit (15) mindestens eine Quelle (45) für eine Ammoniaklösung und eine Destilliereinheit (29), die die Ammoniaklösung auf selektiv justierbare Weise destillieren kann, umfasst, um gasförmiges Ammoniak zu erhalten, das mindestens teilweise der ersten Kondensiereinrichtung (13) zugeführt werden soll.

2. Anlage nach Anspruch 1, **dadurch gekennzeichnet, dass** sie auch eine Komprimierungs- oder Belüftungsstation (12) umfasst, um das gasförmige Ammoniak zu bewegen, wobei die Komprimierungs- oder Belüftungsstation (12) auf einer Seite sowohl mit der Behandlungsmaschine (11) als auch mit der Reintegrationseinheit (15) und auf der anderen Seite mit der ersten Kondensiereinrichtung (13) verbunden ist.

3. Anlage nach Anspruch 1, **dadurch gekennzeichnet, dass** die Destilliereinheit (29) mindestens zwei Destilliereinrichtungen (31, 32, 33) umfasst, die zueinander sowohl hydraulisch, für die Passage der flüssigen Ammoniaklösung zwischen ihnen, als auch pneumatisch, für die Passage von gasförmigem Ammoniak in der umgekehrten Richtung, verbunden sind.

4. Anlage nach Anspruch 3, **dadurch gekennzeichnet, dass** die mindestens zwei Destilliereinrichtungen (31, 32, 33) mit Mitteln (35) zum Justieren und Steuern der Temperatur assoziiert sind, die sie auf einer zunehmend steigenden Temperatur in der Richtung des Flusses der flüssigen Ammoniaklösung halten.

5. Anlage nach einem vorhergehenden Anspruch, **dadurch gekennzeichnet, dass** die Ammoniaklösung, die in der Reintegrationseinheit (15) reintegriert werden kann, eine Ammoniumhydratlösung ist.

6. Anlage nach einem der Ansprüche 1 bis 4, **dadurch gekennzeichnet, dass** die Ammoniaklösung, die in der Reintegrationseinheit (15) reintegriert werden kann, eine Lösung von Ammoniumsalzen ist.

7. Anlage nach einem vorhergehenden Anspruch, **dadurch gekennzeichnet, dass** die Reintegrationseinheit (15) zusätzlich zu der ersten Kondensiereinrichtung (13) eine zweite Kondensiereinrichtung (30) umfasst, die zwischen der ersten Destilliereinrichtung (31) und der Komprimierungs- oder Belüftungsstation (12) angeordnet werden kann, um das Ammoniak weiter zurück zu gewinnen.

8. Anlage nach einem vorhergehenden Anspruch, **dadurch gekennzeichnet, dass** die Behandlungsmaschine (11) einen Aufgabebehälter (22) mit einer größten Kapazität im Bereich von 100 Litern umfasst, die Ammoniak der Behandlungsmaschine (11) zuführen kann, wobei der Aufgabebehälter (22) direkt mit der ersten Kondensiereinrichtung (13) verbunden ist.

9. Anlage nach einem vorhergehenden Anspruch, **dadurch gekennzeichnet, dass** die erste Kondensiereinrichtung (13) mit einer Kühleinrichtung (27) assoziiert ist, die die Kondensation des Ammoniaks aus dem gasförmigen Zustand gestatten kann.

10. Verfahren zum Rückgewinnen und Reintegrieren von Ammoniak, umfassend mindestens einen Schritt des Imprägnierens des Textilprodukts in einer Behandlungsmaschine (11), einen Schritt des Extrahierens der Ammoniakgase, einen Schritt des Rückgewinnens und Kondensierens der extrahierten Gase, einen Schritt des Integrierens des verbrauchten Ammoniaks, **dadurch gekennzeichnet, dass** der Schritt des Integrierens des verbrauchten Ammoniaks einen Schritt des Destillierens einer Ammoniaklösung umfasst, um eine selektiv justierbare Menge an gasförmigem Ammoniak zu erhalten, das in die Behandlungsmaschine (11) des Textilprodukts wieder eingeleitet werden soll.

11. Verfahren nach Anspruch 10, **dadurch gekennzeichnet, dass** der Arbeitsdruck gleich dem atmosphärischen Druck ist oder kleiner oder größer als der atmosphärische Druck ist.

## Revendications

1. Installation pour récupérer et réintégrer de l'ammoniac associée à une machine de traitement (11) pour traiter des produits textiles, l'installation comprenant une unité de récupération comportant au moins un premier dispositif de condensation (13), capable de récupérer de l'ammoniac gazeux extrait à partir de ladite machine de traitement (11), et de fournir de l'ammoniac liquide à ladite machine de traitement (11), **caractérisée en ce qu'**elle comprend en outre une unité de réintégration (15), capable de réintégrer dans la machine de traitement (11) une quantité d'ammoniac sensiblement égale à celle consommée durant le traitement, l'unité de réintégration (15) comprenant au moins une source (45) de solution d'ammoniac et une unité de distillation (29) capable de distiller ladite solution d'ammoniac, de manière sélectivement réglable, afin d'obtenir de l'ammoniac gazeux destiné à être fourni au moins partiellement audit premier dispositif de condensation (13).

2. Installation selon la revendication 1, **caractérisée en ce qu'**elle comprend en outre un poste de compression ou de ventilation (12) pour déplacer l'ammoniac gazeux, ledit poste de compression ou de ventilation (12) étant raccordé sur un côté à la fois à la machine de traitement (11) et à l'unité de réintégration (15) et sur l'autre côté audit premier dispositif de condensation (13).

3. Installation selon la revendication 1, **caractérisée en ce que** ladite unité de distillation (29) comprend au moins deux dispositifs de distillation (31, 32, 33) raccordés l'un par rapport à l'autre, les deux hydrauliquement, pour le passage entre eux de ladite solution d'ammoniac liquide, et également de façon pneumatique, pour le passage d'ammoniac gazeux dans la direction inverse.

4. Installation selon la revendication 3, **caractérisée en ce que** lesdits au moins deux dispositifs de distillation (31, 32, 33) sont associés à des moyens (35) pour régler et réguler la température, qui les maintiennent à une température augmentant progressivement dans la direction d'écoulement de la solution d'ammoniac liquide.

5. Installation selon une quelconque revendication précédente, **caractérisée en ce que** la solution d'ammoniac capable d'être réintégrée dans ladite unité de réintégration (15) est une solution d'hydrate d'ammonium.

6. Installation selon une quelconque des revendications 1 à 4 précédentes, **caractérisée en ce que** la solution d'ammoniac qui est capable d'être réintégrée dans ladite unité de réintégration (15) est une solution de sels d'ammonium.

7. Installation selon une quelconque revendication précédente, **caractérisée en ce que** ladite unité de réintégration (15) comprend, en plus du premier dispositif de condensation (13), un second dispositif de condensation (30) capable d'être interposé entre ledit premier dispositif de distillation (31) et le poste de compression ou de ventilation (12) afin de récupérer davantage l'ammoniac.

8. Installation selon une quelconque revendication précédente, **caractérisée en ce que** ladite machine de traitement (11) comprend un réservoir d'alimentation (22), avec une capacité maximum dans la plage de 100 litres, capable de fournir de l'ammoniac à ladite machine de traitement (11), ledit réservoir d'alimentation (22) étant directement raccordé au premier dispositif de condensation (13).

9. Installation selon une quelconque revendication précédente, **caractérisée en ce que** ledit premier dispositif de condensation (13) est associé à un dispositif de refroidissement (27) capable de permettre la condensation de l'ammoniac à partir de l'état gazeux.

10. Procédé pour récupérer et réintégrer de l'ammoniac, comprenant au moins une étape d'imprégnation du produit textile dans une machine de traitement (11), une étape d'extraction des gaz d'ammoniac, une étape de récupération et de condensation des gaz extraits, une étape d'intégration de l'ammoniac consommé, **caractérisée en ce que** ladite étape d'intégration de l'ammoniac consommé comprend une étape de distillation d'une solution d'ammoniac, afin d'obtenir une quantité sélectivement réglable d'ammoniac gazeux destinée être réintroduite dans la machine de traitement (11) du produit textile.

11. Procédé selon la revendication 10, **caractérisée en ce que** la pression de fonctionnement est égale à la pression atmosphérique, est inférieure ou supérieure à la pression atmosphérique.
